# EUROPÄISCHE PATENTANMELDUNG

(11) **EP 1 731 487 A1**
(43) Veröffentlichungstag der Anmeldung: **13.12.2006**
(21) Anmeldenummer: 06011410.5
(22) Anmeldetag: 01.06.2006
(51) Int. Cl.: C02F 3/12, B01D 17/032

(54) **Verfahren und Vorrichtung zum Abzug einer Flüssigkeit aus einem Becken**

(30) Priorität: 07.06.2005 DE 102005026215
(71) Anmelder: LINDE-KCA-Dresden GmbH, 01277 Dresden (DE)
(72) Erfinder: Pankow, Steffen Dr., 01219 Dresden (DE)

(57) **Zusammenfassung**

Es werden ein Verfahren und eine Vorrichtung zum Abzug einer Flüssigkeit, insbesondere Klarwasser, aus einem Becken 1, z.B. einem Abwasserreinigungsbecken, beschrieben. In die im Becken befindliche Flüssigkeit wird ein horizontales Abzugsrohr 2 mit mehreren, über die Abzugsrohrlänge verteilten vertikalen Rohreinläufen 3 eingetaucht. Die Rohreinläufe 3 enden nach unten senkrecht im Becken 1 und weisen im oberen Bereich jeweils eine Ausströmöffnung zur Abgabe von Flüssigkeit in das Abzugsrohr 2 auf. Während des Abzugsvorganges werden die Rohreinläufe 3 gleichmäßig durchströmt, so dass ein dauerhaft flächiger Flüssigkeitsabzug ohne Bereiche erhöhter Strömung gewährleistet ist. Dadurch wird ein Eintrag von Feststoffpartikeln in das Abzugsrohr 2 verhindert.

## Beschreibung

Die Erfindung betrifft ein Verfahren und eine Vorrichtung zum Abzug einer Flüssigkeit aus einem Becken.

Bei der Behandlung von Flüssigkeiten, z.B. von kommunalen oder industriellen Abwässern, Prozessflüssigkeiten in Industrieprozessen oder Trinkwasser, wird die Flüssigkeit üblicherweise in ein Becken eingeleitet, in dem bestimmte Behandlungsschritte, beispielsweise eine biologische Reinigung mit Belebtschlamm, durchgeführt werden. Während dieser Behandlung fallen in der Regel neben der aufbereiteten Flüssigkeit Nebenprodukte an, die von der aufbereiteten Flüssigkeit abgetrennt werden müssen. Insbesondere bei der biologischen Behandlung von Abwasser muss das gereinigte Abwasser vom Belebtschlamm getrennt werden. Sofern die Abtrennung im Behandlungsbecken selbst vorgenommen werden soll, sind hohe Ansprüche an die Abzugseinrichtung zur Ableitung der aufbereiteten Flüssigkeit zu stellen.

In der Abwasserbehandlung stellt sich das Problem, gereinigtes Abwasser getrennt vom Belebtschlamm aus dem Becken abzuziehen, vor allem bei sogenannten SBR (Sequencing Batch Reactor)-Anlagen. SBR-Anlagen stellen eine einfache aber wirkungsvolle Prozesstechnik zur Abwasserbehandlung sowohl im kommunalen als auch im industriellen Bereich dar. Im Gegensatz zur klassischen Verfahrensführung mit verschiedenen nacheinander angeordneten Verfahrensstufen (Vorklärung, Belebung, Nachklärung) finden beim SBR-Prozess die einzelnen Verfahrensschritte zeitlich gestaffelt in ein und demselben Becken statt. Dadurch vereinfacht sich die Verfahrensführung maßgeblich.

Das Herzstück dieses Prozesses stellt dabei die Klarwasserabzugseinrichtung dar, da das gereinigte Abwasser möglichst schnell aus dem Becken abgeführt werden muss, ohne die sedimentierten Schlammflocken wieder zu mobilisieren oder auf sonstige Weise die Klarwasserqualität zu beeinflussen.

Dazu werden derzeit vor allem schwenkbare Konstruktionen (vorzugsweise mit Schwimmkörpern) bzw. bei kleineren Anlagen schwimmende Abzugseinrichtungen eingesetzt. Da mit der Größe der Anlage auch die Abzugseinrichtung proportional wächst, sind bei entsprechender Größe der Kläranlagen auch entsprechend große Abzugseinheiten zu installieren. Diese dann in Investition und Betrieb aufwendigeren Einheiten können den Vorteil der sonst recht einfachen SBR-Technologie sehr schnell aufheben.

Der vorliegenden Erfindung liegt die Aufgabe zugrunde, ein Verfahren und eine Vorrichtung zum Abzug einer Flüssigkeit aus einem Becken zur Verfügung zu stellen, die eine technisch einfache und kostengünstige Alternative zu den vorgenannten Abzugseinrichtungen und Methoden bietet.

Diese Aufgabe wird erfindungsgemäß vorrichtungsseitig gelöst durch ein im Betriebszustand in die Flüssigkeit getauchtes horizontales Abzugsrohr mit mehreren, über die Abzugsrohrlänge verteilten vertikalen Rohreinläufen, die nach unten senkrecht im Becken enden und jeweils im oberen Bereich eine Ausströmöffnung zur Abgabe von Flüssigkeit in das Abzugsrohr aufweisen.

Dabei liegt der Erfindung die Erkenntnis zugrunde, dass eine in der Höhenlage festeingestellte Ablaufvorrichtung in vielen Fällen ausreicht, da der Sedimentationsprozess in einem nicht durchflossenen Becken bereits nach sehr kurzer Zeit abgeschlossen ist. Einmal sedimentierter Schlamm weist ein erheblich schlechteres Fließverhalten auf als das Klarwasser mit seiner geringeren Dichte.

Wesentlich wichtiger für den Prozess hingegen sind die Gewährleistung eines dauerhaft flächigen Klarwasserabzugs ohne Bereiche erhöhter Strömung und eine Verhinderung des Eindringens von Feststoffpartikeln in die Abzugseinrichtung während der Belüftungs- bzw. Durchmischungsphase.

Der Kem der Erfindung besteht also in einem getauchten Abzugsrohr, welches fest oder gegebenenfalls auch höhenverstellbar im Becken angeordnet ist und in regelmäßigen Abständen vorzugsweise vertikale Rohreinläufe besitzt. Diese Rohreinläufe enden nach unten senkrecht im Becken und besitzen innerhalb des Abzugsrohres im oberen Teil eine Öffnung zur Abgabe der Flüssigkeit zum Abzugsrohr hin.

Während des Abzugsvorganges werden die Rohreinläufe gleichmäßig durchströmt, wobei durch eine entsprechende Dimensionierung des Rohrdurchmessers eine Anpassung an den abzuleitenden Volumenstrom vorgenommen werden kann. Durch den Druckverlust in den Rohreinläufen, der relativ hoch im Vergleich zum hydraulischen Verlust im restlichen Abzugsrohr gewählt wird, wird gewährleistet, dass der Zulauf in das Abzugsrohr in allen Bereichen annähernd gleich ist.

Gemäß einer besonders bevorzugten Ausgestaltung der Erfindung wird diese Konstruktion mit einer Druckluft- oder Gasbeaufschlagung kombiniert. Dabei ist das Abzugsrohr an einem Ende geschlossen und weist am anderen Ende zum Gegendruckaufbau ein u-förmiges Ablaufrohr in der Art eines Syphons auf. Wird nun z.B. am Ende des Abzugsvorganges das Abzugsrohr mit Druckluft oder Gas beaufschlagt, so füllt sich das Abzugsrohr mit Luft oder Gas und verringert den Flüssigkeitsdurchsatz bis hin zur vollständigen Absperrung. In diesem Moment ist der Abzugsvorgang beendet.

Vorrichtungsseitig wird dies dadurch ermöglicht, dass im oberen Bereich des Abzugsrohres vorzugsweise Gas- und/oder Lufteinspeisungseinrichtungen vorgesehen sind.

Zweckmäßigerweise stehen die Gas- und/oder Lufteinspeisungseinrichtungen mit einer Druckluftversorgungseinrichtung in Verbindung. Dadurch kann auf einfache Weise der gewünschte Druckaufbau im Abzugsrohr bewirkt werden.

In einer Weiterbildung des Erfindungsgedankens stehen die Gas- und/oder Lufteinspeisungseinrichtungen mit einem Flüssiggasreservoir, z.B. einem Flüssigsauerstofftank oder einem Druckgasbehälter in Verbindung. Durch Verdampfen des Flüssiggases oder Entnahme von unter Druck stehendem Gas aus dem Druckgasbehälter kann neben dem erforderlichen Druckaufbau im Abzugsrohr auch eine besonders hohe Gasanreicherung der Flüssigkeit im Abzugsrohr erreicht werden. Dies ist insbesondere dann wünschenswert, wenn im Abzugsrohr bestimmte Prozesse angeregt werden sollen. Insbesondere kann durch eine Versorgung mit technischem Sauerstoff ein biologischer Restabbau von Inhaltsstoffen der Flüssigkeit noch während des Abzugsvorganges bewirkt werden. Andererseits kann z.B. durch den Einsatz von Stickstoff ein weiterer aeorober Abbau gezielt verhindert werden.

Verfahrensseitig wird die gestellte Aufgabe dadurch gelöst, dass in die Flüssigkeit ein horizontales Abzugsrohr 2 getaucht wird und die Flüssigkeit über vertikale Rohreinläufe 3, die über die Abzugsrohrlänge verteilt sind und nach unten senkrecht im Becken enden, in den Innenraum des Abzugsrohres 2 geleitet und über Ausströmöffnungen 12 im oberen Bereich der Rohreinläufe 3 in den Innenraum des Abzugsrohres 2 abgegeben wird, und die Flüssigkeit schließlich aus dem Becken 1 herausgeführt wird.

Dabei kann das Eintauchen des Abzugsrohres in die Flüssigkeit dadurch geschehen, dass das Abzugsrohr in die Flüssigkeit abgesenkt wird, oder aber auch bei feststehendem Abzugsrohr durch einfaches Fluten des Beckens mit der Flüssigkeit, bis das Abzugsrohr untergetaucht ist.

In einer besonders bevorzugten Ausführungsform der Erfindung wird der Innenraum des Abzugsrohres mit Luft und/oder einem Gas beaufschlagt. Dabei kann in den Innenraum des Abzugsrohres im einfachsten Fall Druckluft eingeleitet werden. Sofern während des Abzugsvorganges beispielsweise ein biologischer Abbau von Flüssigkeitsinhaltsstoffen bewirkt werden soll, wird vorteilhafterweise mit Sauerstoff angereicherte Luft oder technisch reiner Sauerstoff in das Abzugsrohr eingeleitet. Andererseits kann z.B. zur gezielten Verhinderung von aeroben Zuständen im Abzugsrohr ein Inertgas, insbesondere Stickstoff, in das Abzugsrohr eingespeist werden. Beispielsweise zur Regelung des ph-Werts in der Flüssigkeit kann auch ein Kohlendioxidgas eingeleitet werden.

In allen Fällen ergibt sich die Möglichkeit, durch Einstellung des Gasdrucks im Innenraum des Abzugsrohres den Flüssigkeitsdurchsatz im Abgasrohr zur steuern. Wird z.B. am Ende des Abzugsvorganges das Abzugsrohr mit Druckluft beaufschlagt, so führt der steigende Gasdruck im Abzugsrohr zu einer Verringerung des Flüssigkeitsdurchsatzes bis hin zur vollständigen Absperrung. Auf diese Weise kann der Abzugsvorgang beendet werden, ohne dass mechanische Absperrklappen oder ähnliches erforderlich sind.

Mit besonderem Vorteil wird die Erfindung in der Abwasserreinigung, insbesondere bei SBR-Anlagen eingesetzt. Dabei wird das Abwasser in einem Becken in zeitlicher Abfolge einer Vorklärungs-, Belebungs- und Nachklärungsphase unterzogen und das gereinigte Abwasser im Anschluss an die Nachklärungsphase über das horizontale Abzugsrohr aus dem Becken abgezogen. Während der Belebungsphase wird bevorzugt ein sauerstoffhaltiges Gas oder Gasgemisch in das Abzugsrohr eingetragen und im Abzugsrohr ein Gasdruck aufrechterhalten, durch den die Flüssigkeitszufuhr über die vertikalen Rohreinläufe in das Abzugsrohr abgesperrt wird. Im Anschluss an die Belebungsphase wird dann der Gasdruck im Abzugsrohr zweckmäßigerweise zumindest soweit verringert, dass Flüssigkeit über die vertikalen Rohreinläufe in das Abzugsrohr strömt.

Die Erfindung bietet eine kostengünstige und technisch wenig aufwendige Lösung zum Abzug von Flüssigkeiten, insbesondere zum Abzug von Klarwasser aus Abwasserreinigungsanlagen. Mit besonderem Vorteil kann sie im derzeit wachsenden Markt der kommunalen Abwasserbehandlung in Ost- und Südosteuropa eingesetzt werden. Darüberhinaus steht die Erfindung für Anwendungen im Industriebereich zur Verfügung, wo aufgrund der Korrosionsproblematik Edelstahlanwendungen problematisch sind.

Im Folgenden soll die Erfindung anhand eines in den Figuren schematisch dargestellten Ausführungsbeispiels näher erläutert werden.

Es zeigen
- Figur 1: ein Klarwasserabzugssystem für eine SBR-Anlage.
- Figur 2: einen Querschnitt durch ein Abzugsrohr.

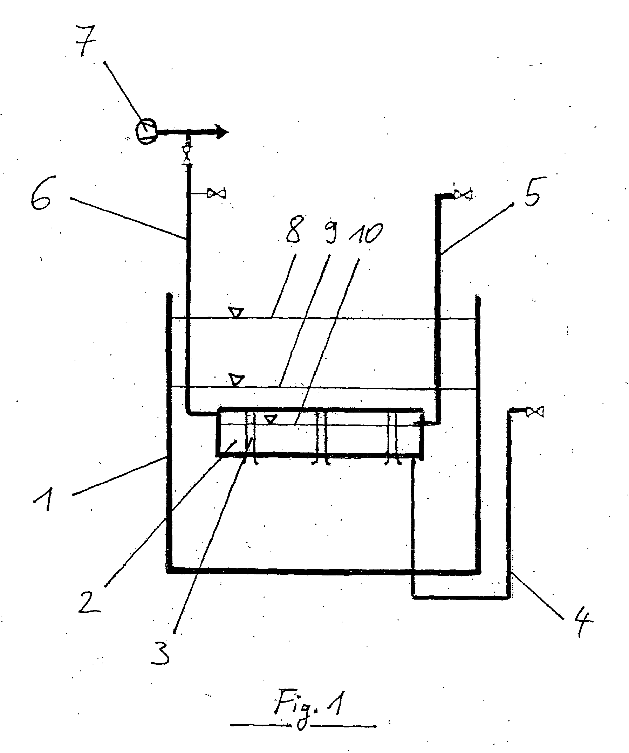

In Figur 1 ist ein Abwasserbecken 1 einer SBR-Anlage dargestellt. Im Abwasserbecken 1 ist ein in das Abwasser eingetauchtes Abzugsrohr 2 vorgesehen. Über die Länge des Abzugsrohres 2 sind insgesamt drei vertikale Rohreinläufe 3 verteilt. Die Rohreinläufe 3 enden nach unten senkrecht im Abwasserbecken 1 und besitzen innerhalb des Abzugsrohres 2 im oberen Teil eine Öffnung zur Abgabe des Abwassers zum Abzugsrohr 2 hin. Über einen Ablauf 4 wird das Abwasser aus dem Abwasserbecken 1 abgeleitet. Über ein zur Beckenbelüftung der Abwasserreinigungsanlage bereits vorhandenes Gebläse 7 und eine Gaszuleitung 6 kann Luft oder ein Gas in das Abzugsrohr 2 gedrückt werden. Der Wasserspiegel im Abzugsrohr 2 ist mit der Bezugsziffer 10 bezeichnet. Im Abwasserbecken 1 stellen sich ein maximaler Wasserspiegel 8 und ein minimaler Wasserspiegel 9 ein. Während des Abzugsvorganges werden die Rohreinläufe 3 gleichmäßig durchströmt. Am Ende des Abzugsvorganges wird das Abzugsrohr 2 mit Druckluft beaufschlagt, so dass es sich mit Luft füllt und der Flüssigkeitsdurchsatz bis hin zur vollständigen Absperrung verringert wird. In diesem Moment ist der Abzugsvorgang beendet. Während des erneuten Befüllvorganges wird entsprechend der Luftdruck im Abzugsrohr 2 erhöht. Da der erforderliche Luftdruck im Abzugsrohr 2 stets unterhalb des Systemdrucks des Belüftungssystems liegt (je nach Höhenlage der Abzugseinrichtung etwa bei 50%), reicht ein sehr kleiner Volumenstrom aus, um dies zu erreichen. Eine Anbindung an ein herkömmliches Beckenbelüftungssystem ist daher möglich. Überflüssige Luft entweicht über die Rohreinläufe 3, eine Regelung des Luftdrucks ist daher nicht erforderlich. Zur Einsparung der Luftmenge ist eine gepulste Luftzugabe in Abhängigkeit des Füllstandes im Abwasserbecken 1 möglich. Während der Belüftungsphase werden die Rohreinläufe 3 nun durch die komprimierte Luft innerhalb des Abzugsrohres 2 verschlossen. Dabei ist die Anzahl der Öffnungen unerheblich. Dringt druckschwankungsbedingt dennoch Belebtschlamm in die Rohreinläufe 3 ein, so sedimentiert dieser sofort wieder frei nach unten. Zusätzlich ist es durch einen kurzen Druckluftstoß nach der Belüftungsphase bzw. vor Beginn des Abzugsvorganges möglich, die Rohreinläufe 3 freizublasen. Mit dem dabei entstehenden Blasenbild kann kontrolliert werden, ob auch auf Dauer ein gleichmäßiger Abzug über die Fläche gegeben ist.

Soll nun Klarwasser abgezogen werden, so wird durch ein Entlüftungsventil 5 die Druckluft im Abzugsrohr 2 entspannt und entsprechend des Druckgefälles strömt das Klarwasser über den Ablauf 4 ab. Dabei kann die Abzugsgeschwindigkeit durch den Gegendruck in bestimmten Grenzen gedrosselt werden.

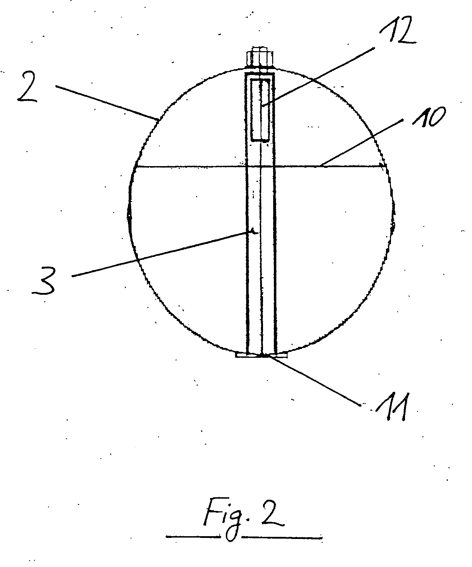

In Figur 2 ist das Abzugsrohr 2 im Querschnitt dargestellt. Der Rohreinlauf 3 endet nach unten senkrecht im Abwasserbecken. Das untere Ende des Rohreinlaufs 3 bildet eine Einlaufzone 11, die auch in Form einer Einlauftrompete oder mit Leitblechen ausgestaltet sein kann. Im oberen Bereich des Rohreinlaufs 3 ist eine Ausströmöffnung 12 zur Abgabe des Abwassers zum Abzugsrohr 2 hin vorgesehen. Der Wasserspiegel im Abzugsrohr 2 ist mit der Bezugsziffer 10 bezeichnet. Das Abzugsrohr 2 kann ein kommerziell verfügbares Rohr mit dem erforderlichen Durchmesser, in der Regel 400 bis 600 mm, sein. Es können verschiedene Materialien, insbesondere beschichteter Schwarzstahl, Edelstahl, ein PE-Rohr, GFK etc., eingesetzt werden. Diese Rohre werden gebohrt, so dass jeweils eine Bohrung an der Ober- und Unterseite des Abzugsrohres 2 vorhanden ist. In diese Bohrungen werden dann die Rohreinläufe eingeschraubt. Diese relativ kleinen und damit transportgünstigen Apparate-Teile, die aus Edelstahl oder beschichtetem Stahl oder auch Kunststoff gefertigt sein können, werden vorgefertigt und am Einsatzort montiert.

## Patentansprüche

1. Vorrichtung zum Abzug einer Flüssigkeit aus einem Becken 1, **gekennzeichnet durch** ein im Betriebszustand in die Flüssigkeit getauchtes horizontales Abzugsrohr 2 mit mehreren, über die Abzugsrohrlänge verteilten vertikalen Rohreinläufen 3, die nach unten senkrecht im Becken 1 enden und jeweils im oberen Bereich eine Ausströmöffnung 12 zur Abgabe von Flüssigkeit in das Abzugsrohr 2 aufweisen.

2. Vorrichtung nach Anspruch 1, **dadurch gekennzeichnet, dass** das Abzugsrohr 2 an einem Ende geschlossen ist und am anderen Ende ein u-förmiges Ablaufrohr 4, aufweist.

3. Vorrichtung nach Anspruch 1 oder 2, **dadurch gekennzeichnet, dass** im oberen Bereich des Abzugsrohres 2 Gas- und/oder Lufteinspeisungseinrichtungen vorgesehen sind.

4. Vorrichtung nach Anspruch 3, **dadurch gekennzeichnet, dass** die Gas- und/oder Lufteinspeisungseinrichtungen mit einer Druckluftversorgungseinrichtung 7 in Verbindung stehen.

5. Vorrichtung nach Anspruch 3, **dadurch gekennzeichnet, dass** die Gas- und/oder Lufteinspeisungseinrichtungen mit einem Flüssiggasreservoir in Verbindung stehen.

6. Vorrichtung nach Anspruch 3, **dadurch gekennzeichnet, dass** die Gas- und/oder Lufteinspeisungseinrichtungen mit einem Druckgasbehälter in Verbindung stehen.

7. Verfahren zum Abzug einer Flüssigkeit aus einem Becken 1, **dadurch gekennzeichnet, dass** in die Flüssigkeit ein horizontales Abzugsrohr 2 getaucht wird und die Flüssigkeit über vertikale Rohreinläufe 3, die über die Abzugsrohrlänge verteilt sind und nach unten senkrecht im Becken 1 enden, in den Innenraum des Abzugsrohres 2 geleitet und über Ausströmöffnungen 12 im oberen Bereich der Rohreinläufe 3 in den Innenraum des Abzugsrohres 2 abgegeben wird, und die Flüssigkeit schließlich aus dem Becken 1 herausgeführt wird.

8. Verfahren nach Anspruch 7, **dadurch gekennzeichnet, dass** der Innenraum des Abzugsrohres 2 mit Luft und/oder einem Gas beaufschlagt wird.

9. Verfahren nach Anspruch 8, **dadurch gekennzeichnet, dass** in den Innenraum des Abzugsrohres 2 Druckluft eingeleitet wird.

10. Verfahren nach Anspruch 8, **dadurch gekennzeichnet, dass** in den Innenraum des Abzugsrohres 2 mit Sauerstoff angereicherte Luft und/oder technisch reiner Sauerstoff eingeleitet wird.

11. Verfahren nach Anspruch 8, **dadurch gekennzeichnet, dass** in den Innenraum des Abzugsrohres 2 ein Inertgas, insbesondere Stickstoff, eingeleitet wird.

12. Verfahren nach Anspruch 8, **dadurch gekennzeichnet, dass** in den Innenraum des Abzugsrohres 2 Kohlendioxidgas eingeleitet wird.

13. Verfahren nach einem der Ansprüche 8 bis 12, **dadurch gekennzeichnet, dass** durch Einstellung des Gasdrucks im Innenraum des Abzugsrohres 2 der Flüssigkeitsdurchsatz im Abzugsrohr 2 gesteuert wird.

14. Verfahren nach einem der Ansprüche 1 bis 13, **dadurch gekennzeichnet, dass** als Flüssigkeit Abwasser verwendet wird, das in einem Becken 1 in zeitlicher Abfolge einer Vorklärungs-, Belebungs- und Nachklärungsphase unterzogen wird und das gereinigte Abwasser im Anschluss an die Nachklärungsphase über das horizontale Abzugsrohr 2 aus dem Becken 1 abgezogen wird.

15. Verfahren nach Anspruch 14, **dadurch gekennzeichnet, dass** während der Belebungsphase ein sauerstoffhaltiges Gas oder Gasgemisch in das Abzugsrohr 2 eingetragen wird und im Abzugsrohr 2 ein Gasdruck aufrechterhalten wird, durch den die Flüssigkeitszufuhr über die vertikalen Rohreinläufe 3 in das Abzugsrohr 2 abgesperrt wird.

16. Verfahren nach Anspruch 14 oder 15, **dadurch gekennzeichnet, dass** im Anschluss an die Belebungsphase der Gasdruck im Abzugsrohr 2 zumindest soweit verringert wird, dass Flüssigkeit über die vertikalen Rohreinläufe 3 in das Abzugsrohr 2 strömt.
